# EUROPEAN PATENT SPECIFICATION

(11) **EP 2 028 448 B1**
(45) Date of publication and mention of the grant of the patent: **30.03.2016**
(21) Application number: 08162597.2
(22) Date of filing: 19.08.2008
(51) Int. Cl.: G01C 21/36, H04M 1/00, G06Q 10/00, G01C 21/34

(54) **Terminal having function for managing position revelant information and program recorded medium**
Endgerät mit Funktion zur Verwaltung positionsrelevanter Informationen und auf einem Medium aufgezeichnetes Programm
Terminal doté d'une fonction pour la gestion d'informations liées à la position et support pour programme enregistré

(30) Priority: 20.08.2007 KR 20070083488
(43) Date of publication of application: 25.02.2009
(73) Proprietor: LG Electronics Inc., Seoul, 150-721 (KR)
(72) Inventor: Kim, Seon Hui c/o LG ELECTRONICS INC. IP GROUP, 153-801, SEOUL (KR); Lee, Jun Jeong c/o LG ELECTRONICS INC. IP GROUP, 153-801, SEOUL (KR)
(74) Representative: Cabinet Plasseraud

(56) References cited:
- EP-A1- 1 729 091
- WO-A1-02/080132
- US-A- 5 790 974
- US-A1- 2002 068 583
- US-A1- 2003 103 002
- US-A1- 2004 158 389
- US-A1- 2006 155 465
- US-A1- 2008 167 937
- US-A1- 2008 195 312
- US-A1- 2009 005 018

## Description

### BACKGROUND OF THE INVENTION

### Field of the Invention

The present invention relates to a terminal, computer program recorded medium and corresponding method that synchronizes position relevant information of the terminal with user scheduled information.

### Discussion of the Related Art

Terminals now provide many additional services beside the basic call service. For example, user's can now access the Internet, play games, watch videos, listen to music, capture images and videos, record audio files, etc. Mobile terminals also now provide broadcasting programs such that user can watch television shows, sporting programs, videos etc.

One example of a terminal is a navigation system. The navigation system provides users a route to a destination marked on a map and a current position on the route. However, the related art navigation system is limited in providing only the route between a current position and a desired position.
Other examples and embodiments may be found in documents EP 1 729 091 A1 and US 5 790 974 A.

### SUMMARY OF THE INVENTION

Accordingly, one object of the present invention is address the above-noted and other drawbacks.

Another object of the present invention is to provide a terminal, medium and corresponding method for providing position relevant information obtained from a user terminal in various forms to a correspondent terminal.

To.achieve these objects and other advantages and in accordance with the purpose of the invention, as embodied and broadly described herein, the present invention provides in one aspect a terminal according to the features of claim 1.

In another aspect, the present invention provides a computer program product embodied on a computer-readable medium according to the features of claim 7.

In still another aspect, the present invention provides a method of controlling a terminal according to the features of claim 9.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram illustrating a terminal according to an embodiment of the present invention;
FIG. 2 is a front perspective view illustrating a terminal according to an embodiment of the present invention;
FIG. 3 is a rear perspective view illustrating the terminal shown in FIG. 2;
FIG. 4 is a front perspective illustrating a terminal according to another embodiment of the present invention;
FIG. 5 is a front perspective view illustrating a terminal attached to a vehicle according to an embodiment of the present invention;
FIG. 6 is an overview illustrating a position relevant information managing system including a terminal according to one embodiment of the present invention;
FIG. 7 is a flowchart illustrating a method of managing position relevant information according to one example;
FIGs. 8A to 8C are overviews of display screens illustrating a method for obtaining user schedule information from a message/e-mail according to one embodiment of the present invention;
FIG. 9 is an overview of display screens illustrating a method for obtaining user schedule information from appointment information managed by a schedule managing program according to an example;
FIG. 10 is an overview of display screens illustrating a method for obtaining user schedule information from appointment information managed by a position-location module driving program;
FIG. 11 is an overview of display screens illustrating a process for displaying position relevant information synchronized with user scheduling information according to one example;
FIGs. 12A and 12B are overviews of display screens illustrating a process for setting a transmitting operation control condition of position relevant information according to one embodiment of the present invention;
FIGs. 13 to 15 are overviews of display screens illustrating position relevant information included in a message transmitted to an appointed correspondent party according to one embodiment of the present invention and according to non claimed examples; and
FIG. 16 is an overview of display screens illustrating a process for connecting a call and/or message to an appointed correspondent party, when an estimated arrival time is delayed more than an appointment time, according to one example.

### DETAILED DESCRIPTION OF THE INVENTION

Reference will now be made in detail to the preferred embodiments of the present invention, examples of which are illustrated in the accompanying drawings.

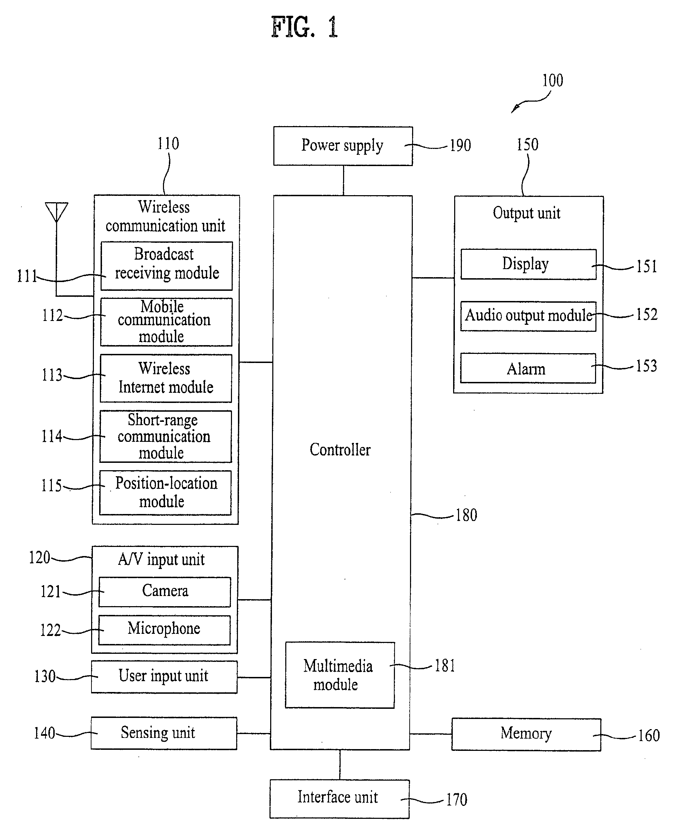

FIG. 1 is a block diagram of a mobile terminal 100 according to an embodiment of the present invention. Examples of such terminals include mobile phones, user equipment, smart phones, computers, digital broadcast terminals, personal digital assistants, portable multimedia players (PMP) and navigators. As shown, the mobile terminal 100 includes a wireless communication unit 110 having one or more components which permits wireless communication between the mobile terminal 100 and a wireless communication system or network within which the mobile terminal is located.

For example, the wireless communication unit 110 includes a broadcast receiving module 111 that receives a broadcast signal and/or broadcast associated information from an external broadcast managing entity via a broadcast channel. The broadcast channel may include a satellite channel and a terrestrial channel.

In addition, the broadcast managing entity generally refers to a system which transmits a broadcast signal and/or broadcast associated information. Examples of broadcast associated information include information associated with a broadcast channel, a broadcast program, a broadcast service provider, etc. For instance, broadcast associated information may include an electronic program guide (EPG) of digital multimedia broadcasting (DMB) and electronic service guide (ESG) of digital video broadcast-handheld (DVB-H).

In addition, the broadcast signal may be implemented as a TV broadcast signal, a radio broadcast signal, and a data broadcast signal, among others. The broadcast signal may further include a broadcast signal combined with a TV or radio broadcast signal.

The broadcast receiving module 111 is also configured to receive broadcast signals transmitted from various types of broadcast systems. For example, such broadcasting systems include the digital multimedia broadcasting-terrestrial (DMB-T) system, the digital multimedia broadcasting-satellite (DMB-S) system, the digital video broadcast-handheld (DVB-H) system, the data broadcasting system known as media forward link only (MediaFLO®) and the integrated services digital broadcast-terrestrial (ISDB-T) system among others. Receiving multicast signals is also possible. Further, data received by the broadcast receiving module 111 may be stored in a suitable device, such as a memory 160.

The wireless communication unit 110 also includes a mobile communication module 112 that transmits/receives wireless signals to/from one or more network entities (e.g., base station, Node-B). Such signals may represent audio, video, multimedia, control signaling, and data, among others.

Also included is a wireless Internet module 113 that supports Internet access for the mobile terminal. The module 113 may be internally or externally coupled to the terminal. The wireless communication unit 110 also includes a short-range communication module 114 that facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

A position-location module 115 is also included in the wireless communication unit 110 and identifies or otherwise obtains the location of the mobile terminal 100. The position-location module 115 may be implemented using global positioning system (GPS) components which cooperate with associated satellites, network components, and combinations thereof.

In addition, as shown in FIG. 1, the mobile terminal 100 also includes an Audio/video (A/V) input unit 120 that provides audio or video signals to the mobile terminal 100. As shown, the A/V input unit 120 includes a camera 121 and a microphone 122. The camera 121 receives and processes image frames of still pictures or video.

Further, the microphone 122 receives an external audio signal while the portable device is in a particular mode, such as a phone call mode, recording mode and voice recognition mode. The received audio signal is then processed and converted into digital data. Also, the portable device, and in particular, the A/V input unit 120, typically includes assorted noise removing algorithms to remove noise generated in the course of receiving the external audio signal. In addition, data generated by the A/V input unit 120 may be stored in the memory 160, utilized by an output unit 150, or transmitted via one or more modules of the communication unit 110. If desired, two or more microphones and/or cameras may be used.

The mobile terminal 100 also includes a user input unit 130 that generates input data responsive to user manipulation of an associated input device or devices. Examples of such devices include a keypad, a dome switch, a touchpad (e.g., static pressure/capacitance), a jog wheel and a jog switch. A specific example is one in which the user input unit 130 is configured as a touchpad in cooperation with a touch screen display, which will be described in more detail below.

A sensing unit 140 is also included in the mobile terminal 100 and provides status measurements of various aspects of the mobile terminal 100. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100, etc.

As an example, when the mobile terminal 100 is a slide-type mobile terminal, the sensing unit 140 may sense whether a sliding portion of the mobile terminal 100 is open or closed. Other examples include the sensing unit 140 sensing the presence or absence of power provided by a power supply 190, the presence or absence of a coupling or other connection between an interface unit 170 and an external device, etc.

Further, the interface unit 170 is often implemented to couple the mobile terminal 100 with external devices. Typical external devices include wired/wireless headphones, external chargers, power supplies, storage devices configured to store data (e.g., audio, video, pictures, etc.), earphones, and microphones, among others. In addition, the interface unit 170 may be configured using a wired/wireless data port, a card socket (e.g., for coupling to a memory card, a subscriber identity module (SIM) card, a user identity module (UIM) card, a removable user identity module (RUIM) card, etc.), audio input/output ports and video input/output ports.

The output unit 150 generally includes various components which support the output requirements of the mobile terminal 100. The mobile terminal 100 also includes a display 151 that visually displays information associated with the mobile terminal 100. For instance, if the mobile terminal 100 is operating in a phone call mode, the display 151 will generally provide a user interface or graphical user interface which includes information associated with placing, conducting, and terminating a phone call. As another example, if the mobile terminal 100 is in a video call mode or a photographing mode, the display 151 may additionally or alternatively display images which are associated with these modes.

Further, the display 151 also preferably includes a touch screen working in cooperation with an input device, such as a touchpad. This configuration permits the display 151 to function both as an output device and an input device. In addition, the display 151 may be implemented using display technologies including, for example, a liquid crystal display (LCD), a thin film transistor-liquid crystal display (TFT-LCD), an organic light-emitting diode display (OLED), a flexible display and a three-dimensional display.

The mobile terminal 100 may also include one or more of such displays. An example of a two-display embodiment is one in which one display is configured as an internal display (viewable when the terminal is in an opened position) and a second display configured as an external display (viewable in both the open and closed positions).

FIG. 1 further shows the output unit 150 having an audio output module 152 which supports the audio output requirements of the mobile terminal 100. The audio output module 152 is often implemented using one or more speakers, buzzers, other audio producing devices, and combinations thereof.

Further, the audio output module 152 functions in various modes including a call-receiving mode, a call-placing mode, a recording mode, a voice recognition mode and a broadcast reception mode. During operation, the audio output module 152 outputs audio relating to a particular function (e.g., call received, message received, and errors).

In addition, the output unit 150 is further shown having an alarm 153, which is used to signal or otherwise identify the occurrence of a particular event associated with the mobile terminal 100. Typical events include a call received, a message received and user input received. An example of such output includes the providing of tactile sensations (e.g., vibration) to a user. For instance, the alarm 153 may be configured to vibrate responsive to the mobile terminal 100 receiving a call or message.

As another example, a vibration is provided by the alarm 153 responsive to receiving user input at the mobile terminal 100, thus providing a tactile feedback mechanism. Further, the various outputs provided by the components of the output unit 150 may be separately performed, or such output may be performed using any combination of such components.

In addition, the memory 160 is generally used to store various types of data to support the processing, control, and storage requirements of the mobile terminal 100. Examples of such data include program instructions for applications operating on the mobile terminal 100, call history, contact data, phonebook data, messages, pictures, video, etc.

Further, the memory 160 shown in FIG. 1 may be implemented using any type or combination of suitable volatile and non-volatile memory or storage devices including random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, card-type memory, or other similar memory or data storage device.

The terminal 100 also includes a controller 180 that typically controls the overall operations of the mobile terminal 100. For instance, the controller 180 performs the control and processing associated with voice calls, data communications, instant message communications, video calls, camera operations and recording operations. As shown in FIG. 1, the controller 180 may also include a multimedia module 181 for providing multimedia playback functions. The multimedia module 181 may be configured as part of the controller 180, or may be implemented as a separate component.

In addition, a power supply 190 provides power used by the various components for the portable device. The provided power may be internal power, external power, or combinations thereof.

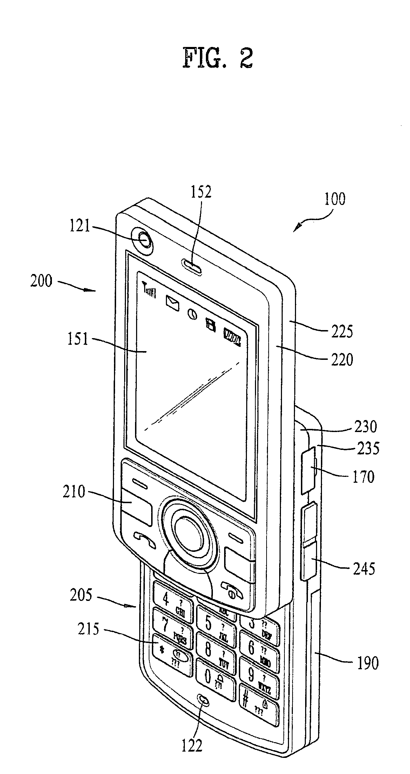

Next, FIG. 2 is a front side view of the mobile terminal 100 according to an embodiment of the present invention. As shown in FIG. 2, the mobile terminal 100 includes a first body 200 configured to slideably cooperate with a second body 205. The user input unit 130 described in FIG. 1 may include a first input unit such as function keys 210, a second input unit such as a keypad 215, and a third input unit such as side keys 245.

The function keys 210 are associated with the first body 200, and the keypad 215 is associated with the second body 205. The keypad 215 includes various keys (e.g., numbers, characters, and symbols) to enable a user to place a call, prepare a text or multimedia message, and otherwise operate the mobile terminal 100.

In addition, the first body 200 slides relative to the second body 205 between open and closed positions. In a closed position, the first body 200 is positioned over the second body 205 in such a manner that the keypad 215 is substantially or completely obscured by the first body 200. In the open position, user access to the keypad 215, as well as the display 151 and function keys 210, is possible. The function keys 210 are convenient to a user for entering commands such as start, stop and scroll commands.

Further, the mobile terminal 100 is operable in either a standby mode (e.g., able to receive a call or message, receive and respond to network control signaling), or an active call mode. Typically, the mobile terminal 100 functions in a standby mode when in the closed position, and an active mode when in the open position. However, the mode configuration may be changed as required or desired.

In addition, the first body 200 is formed from a first case 220 and a second case 225, and the second body 205 is formed from a first case 230 and a second case 235. The first and second cases are preferably formed from a suitably ridge material such as injection molded plastic, or formed using metallic material such as stainless steel (STS) and titanium (Ti).

If desired, one or more intermediate cases may be provided between the first and second cases of one or both of the first and second bodies 200 and 205. In addition, the first and second bodies 200 and 205 are typically sized to receive electronic components used to support the operation of the mobile terminal 100.

Also, the first body 200 includes the camera 121 and the audio output unit 152, which is configured as a speaker, positioned relative to the display 151. The camera 121 may also be constructed in such a manner that it can be selectively positioned (e.g., rotated, swiveled, etc.) relative to the first body 200.

Further, the function keys 210 are positioned adjacent to a lower side of the display 151. As discussed above, the display 151 can be implemented as an LCD or OLED. The display 151 may also be configured as a touch screen having an underlying touchpad which generates signals responsive to user contact (e.g., finger, stylus, etc.) with the touch screen.

Also, the second body 205 includes the microphone 122 positioned adjacent to the keypad 215, and side keys 245, which are one type of a user input unit, positioned along the side of the second body 205. Preferably, the side keys 245 are configured as hot keys, such that the side keys 245 are associated with a particular function of the mobile terminal 100. As shown, the interface unit 170 is positioned adjacent to the side keys 245, and the power supply 190 in a form of a battery is located on a lower portion of the second body 205.

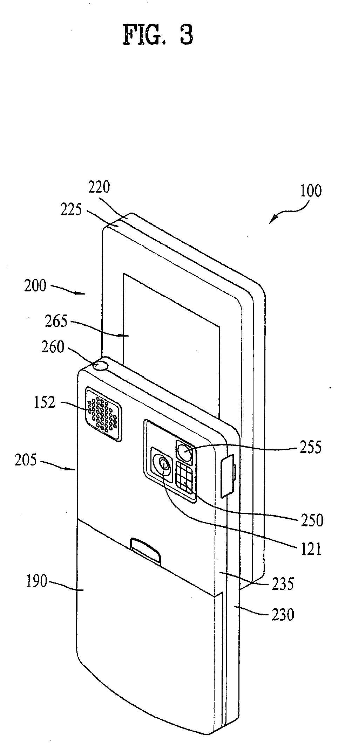

FIG. 3 is a rear side view of the mobile terminal 100 shown in FIG. 2. As shown in FIG. 3, the second body 205 includes the camera 121, and an associated flash 250 and mirror 255. The flash 250 operates in conjunction with the camera 121 of the second body 205, and the mirror 255 is useful for assisting a user to position the camera 121 in a self-portrait mode. In addition, the camera 121 of the second body 205 faces a direction which is opposite to a direction faced by the camera 121 of the first body 200 shown in FIG. 2.

In addition, each of the cameras 121 of the first and second bodies 200 and 205 may have the same or different capabilities. For example, in one embodiment, the camera 121 of the first body 200 operates with a relatively lower resolution than the camera 121 of the second body 205. Such an arrangement works well during a video conference call, for example, in which reverse link bandwidth capabilities may be limited. Further, the relatively higher resolution of the camera 121 of the second body 205 (FIG. 3) is useful for obtaining higher quality pictures for later use.

The second body 205 also includes the audio output module 152 configured as a speaker, and which is located on an upper side of the second body 205. The audio output modules of the first and second bodies 200 and 205 may also cooperate together to provide stereo output. Moreover, either or both of these audio output modules may be configured to operate as a speakerphone.

The terminal 100 also includes a broadcast signal receiving antenna 260 located at an upper end of the second body 205. The antenna 260 functions in cooperation with the broadcast receiving module 111 (FIG. 1). If desired, the antenna 260 may be fixed or configured to retract into the second body 205. Further, the rear side of the first body 200 includes a slide module 265, which slideably couples with a corresponding slide module located on the front side of the second body 205.

In addition, the illustrated arrangement of the various components of the first and second bodies 200 and 205 may be modified as required or desired. In general, some or all of the components of one body may alternatively be implemented on the other body. Further, the location and relative positioning of such components may be positioned at locations which differ from those shown by the representative figures.

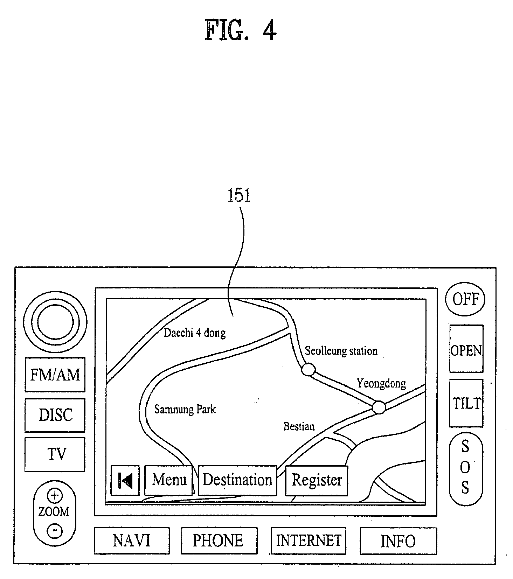

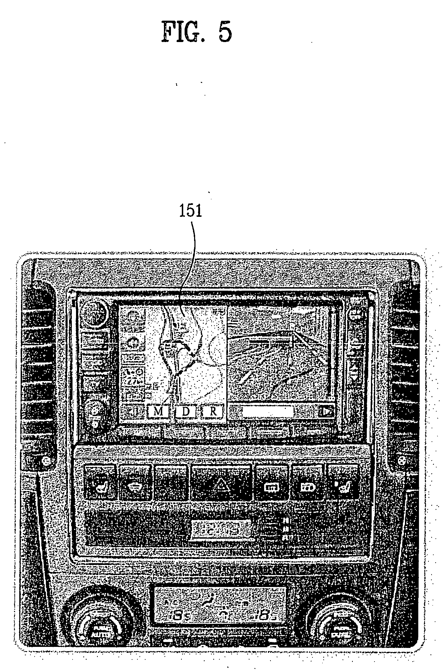

In addition, the terminal 100 according to embodiments of the present invention can be implemented into a vehicle navigation system, as shown in FIGs. 4 or 5, as well as the mobile phone shown in FIGs. 2 or 3.

Next, FIG. 4 is a front perspective of a vehicle navigation system having the display module 151 for displaying an image of a road guide service in progress, and FIG. 5 is a front perspective of a vehicle navigation system fixed to a vehicle. FIG. 1 will also be referred to throughout the description of the present invention.

Further, the vehicle navigation system shown in FIGs. 4 or 5 can be detachably provided to a vehicle. Similarly, the mobile phone type terminal 100 shown in FIGs. 2 can be detachably provided to a vehicle and is capable of performing a vehicle navigation function.

In addition, when a position-location module driving program (explained later) is executed, the terminal 100 receives position information of the terminal 100 from at least one satellite through the position-location module 115. In this instance, the position information is coordinate information of the terminal 100 and can be represented as a latitude and a longitude, for example.

Further, the controller 180 obtains various position relevant information based on the position information received by the position-location module 115. The controller 180 also synchronizes the obtained position relevant information with user schedule information stored in the memory 160. Hence, the controller 180 is able to control an operation of the position-location module 115 according to the user schedule information (e.g., appointment place, appointment time, appointed correspondent party, etc.).

In addition, the wireless communication unit 110 transmits the position relevant information synchronized with the user schedule information via the controller 180 to an external terminal. Further, the external terminal may be an appointed correspondent party recognized from the user schedule information.

The terminal 100 of FIGs. 1-5 is also configured to operate within a communication system which transmits data via frames or packets, including both wireless and wireline communication systems, and satellite-based communication systems. Such communication systems utilize different air interfaces and/or physical layers.

Examples of such air interfaces utilized by the communication systems include, for example, frequency division multiple access (FDMA), time division multiple access (TDMA), code division multiple access (CDMA), and universal mobile telecommunications system (UMTS), the long term evolution (LTE) of the UMTS, and the global system for mobile communications (GSM). By way of non-limiting example only, the following description refers to a CDMA communication system, but such teachings apply equally to other system types.

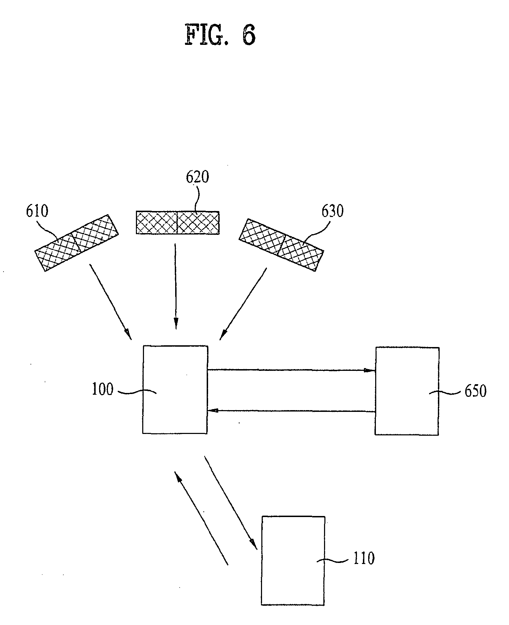

Next, FIG. 6 is an overview of a position relevant information managing system including a terminal according to one embodiment of the present invention. In FIG. 6, the terminal 100 receives position information from at least one or more satellites 610, 620 and 630. In addition, the position information corresponds to coordinate information represented as a latitude and longitude, for example.

Further, the terminal 100 generates various types of information using the received position information. The terminal 100 can also receive various position relevant information from an external server 650 based on the position information of the terminal 100. For example, the external server 650 can determine the position information of the terminal 100 in advance by receiving the corresponding position information from at least one of the satellites 610, 620 and 630 or from the terminal 100.

In particular, according to an embodiment of the present invention, the terminal 100 generates position relevant information synchronized with user schedule information or can be provided with position relevant information synchronized with user schedule information by providing the user schedule information to the external server 650. Therefore, the terminal 100 generates specific information by itself or can be example provided with specific information by the external server 650.

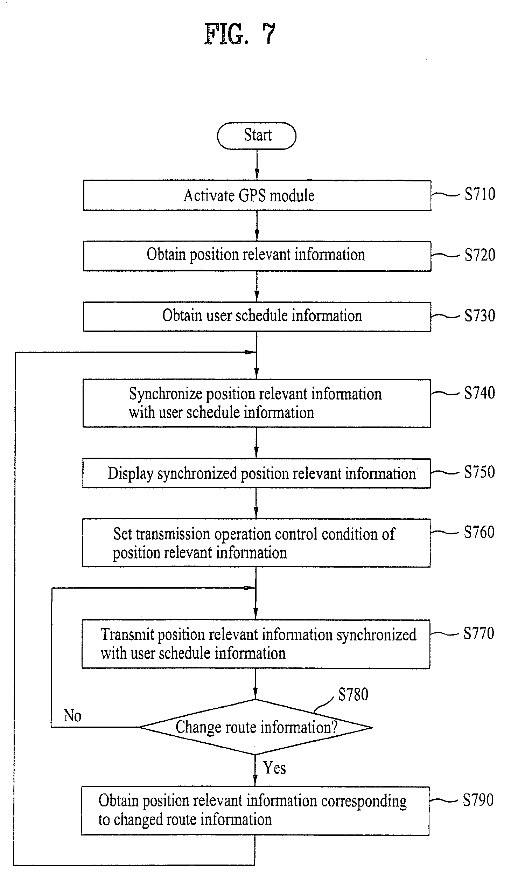

In addition, the terminal 100 can also provide the external terminal 110 with the generated position relevant information or the position relevant information synchronized with the user schedule information in various ways. A method of providing the position relevant information will now be explained in more detail with reference to FIG. 7.

In particular, FIG. 7 is a flowchart illustrating a method of managing position relevant information implemented by a computer program stored in a medium according to one example. As shown in FIG. 7, the terminal 100 activates the position-location module 115 (S710).

For instance, if an activation command signal of the position-location module 115 is input, the terminal 100 activates the position-location module 115. In addition, if an activation time of the position-location module 115 is preset, the terminal 100 activates the position-location module 115 as soon as the activation time occurs.

Also, when the terminal 100 detects a current time is a predetermined time prior to an appointment time, the terminal 100 can also activate the position-location module 115. In this instance, the appointment time is directly input by a user or can be obtained from appointment information managed by a schedule management program or a position-location module driving program.

Then, in FIG. 7, as a result of the activation of the position-location module 115, the terminal 100 obtains position relevant information (S720). Further, in the obtaining step S720, as the position-location module 115 is activated, the terminal 100 receives position information of the terminal 100 from at least one satellite. The position information can include coordinate information represented as longitude and latitude, for example.

In addition, in the obtaining step S720, the terminal 100 can obtain various position relevant informations such as a map on which a current position of the terminal 100 is marked, a traveling route mark of the terminal 100 on the map, a traveling speed of the vehicle including the terminal 100 and the like using the position information of the terminal 100.

Further, in the obtaining step S720, and as discussed above, the position relevant information is generated by the terminal 100 itself based on the position information of the terminal 100 or can be generated and provided by the external server 650.

Also, in FIG. 7, the terminal 100 obtains user schedule information from various types of information stored in the memory 160 (S730). The terminal 100 then synchronizes the position relevant information obtained in the obtaining step S720 with the user scheduling information obtained in the obtaining step S730 (S740).

Further, the user schedule information corresponds to information relevant to the terminal user's schedule, appointments, schedules and the like, which can be synchronized with the position relevant information obtained via the position-location module 115. The user schedule information includes an appointment place, an appointment time, an appointed correspondent party and the like.

Thus, the terminal 100 is able to obtain user schedule information from a previously transmitted/received message and/or e-mail, appointment information managed by a schedule management program and appointment information managed by a position-location module driving program among the information stored in the memory 160. Optionally, the obtaining step S730 can be executed prior to the activating step S710 or the obtaining step S720.

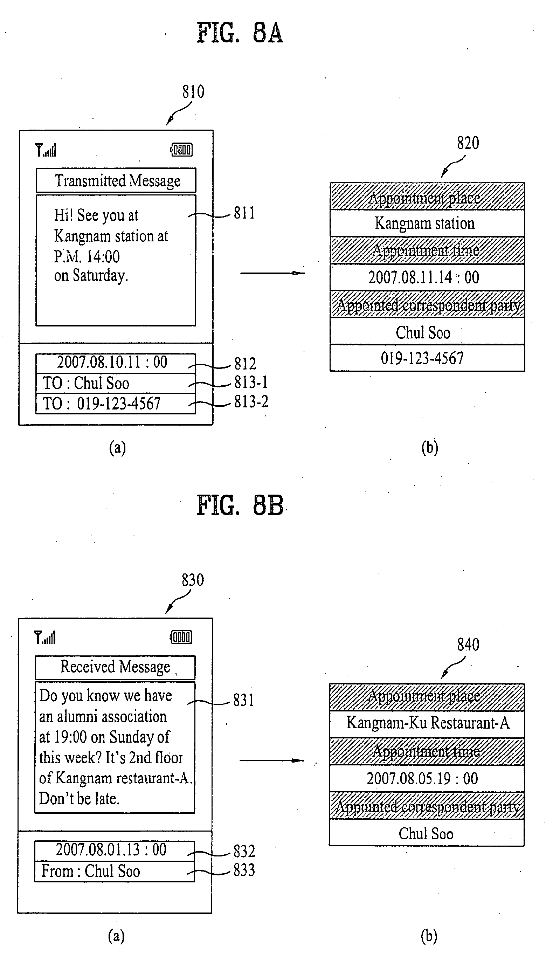

A method for obtaining user schedule information according to an embodiment of the present invention will now be explained with reference to FIGs. 8A to 10. In addition, in this embodiment, the user schedule information includes an appointment place, an appointment time and an appointed correspondent party.

FIGs. 8A to 8C are overviews of display screens illustrating a method for obtaining user schedule information from a message/e-mail according to one embodiment of the present invention. Referring to FIG. 8A, the terminal 100 obtain user schedule information from a transmitted message.

For instance, the terminal 100 can obtain an 'appointment place and appointment time' from contents 811 of the transmitted message and a transmitted date '2007.08.10.11:00' 812 of the transmitted message. The terminal 100 can also obtain an 'appointed correspondent party' from a recipient 'Chul Soo and 019-123-4567' 813-1 and 813-2 (see FIG. 8A(a)).

In particular, as shown in FIGs. 8A(a) and (b), the terminal 100 can determine that the appointment place is 'Kangnam station' from 'Let's meet at Kangnam station' in the content 811. Further, the appointment time is '2007.08.11.14:00', which corresponds to 02:00 P.M. on Saturday of the week for '2007.08.01', from '∼P.M. 02:00 on Saturday' in the content 811.

Also, as shown in FIG. 8A(b), the appointed correspondent party is 'Chul Soo', who is the recipient of the transmitted message, and his phone number '019-123-4567'. In this example, 'Chul Soo' is a specific name from names set for the subjects of which contact numbers or addresses (e.g., terminal numbers, e-mail addresses, etc.) are stored in the terminal 100. The extracted information is shown in the table 820 in FIG. 8A(b).

Referring to FIG. 8B, the terminal 100 is able to obtain user schedule information from a received message. For instance, the terminal 100 can obtain the 'appointment place and appointment time' from contents 831 of the received message and a received date '2007.08.01.13:00' 832 of the received message. The terminal 10 can also obtain the 'appointed correspondent party' from the originator 'Chul Soo' 833.

In particular, as shown in FIG. 8B(a), it can be determined that the appointment place is 'Restaurant-A in Kangnam-Ku' on the' ∼2^{nd} floor of restaurant-A in Kangnam.∼' in the contents 831. The terminal 100 can also determined that the appointment time is '2007.08.05.19:00', which corresponds to 07:00 P.M. on Sunday of the week for '2007.08.01', from '∼P.M. 07:00 on Sunday of this week∼' and the received date of '2007.08.01.13:00' 832 in the content 831. Further, the terminal 100 can determine that the appointed correspondent party is 'Chul Soo', who is the originator of the received message. The extracted information is shown in the table 840 in FIG. 8B(b).

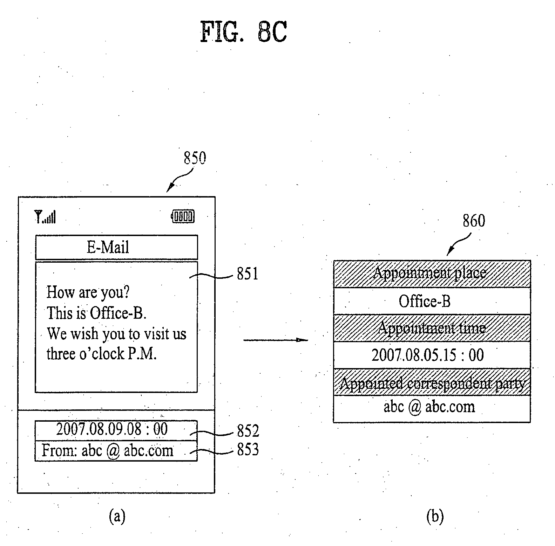

Referring to FIG. 8C, the terminal 100 can also obtain the user scheduling information from a received e-mail. For instance, the terminal 100 can obtain the 'appointment place and appointment time" from contents 851 of the received e-mail and the received date of '2007.08.09.08:00' 852. The terminal 100 can also obtain the 'appointed correspondent party' from an originator 'abc@abc.com' 853 (see FIGS. 8C(a) and (b)).

In particular, the terminal 100 can determine that the appointment place is 'Office-B' from '∼Office-B. -visit the corresponding office, Please.' in the content 851. The terminal 100 can also determine that the appointment time is '2007.08.09.15:00' from 'P.M. 03:00, today' and a received date '2007.08.09.08:00' 852 in the content 851. Further, the terminal 100 can determine that the appointed correspondent party is the e-mail originator 'abc@abc.com' or a terminal user corresponding to 'abc@abc.com'. The extracted information is shown in the table 860 in FIG. 8C(b).

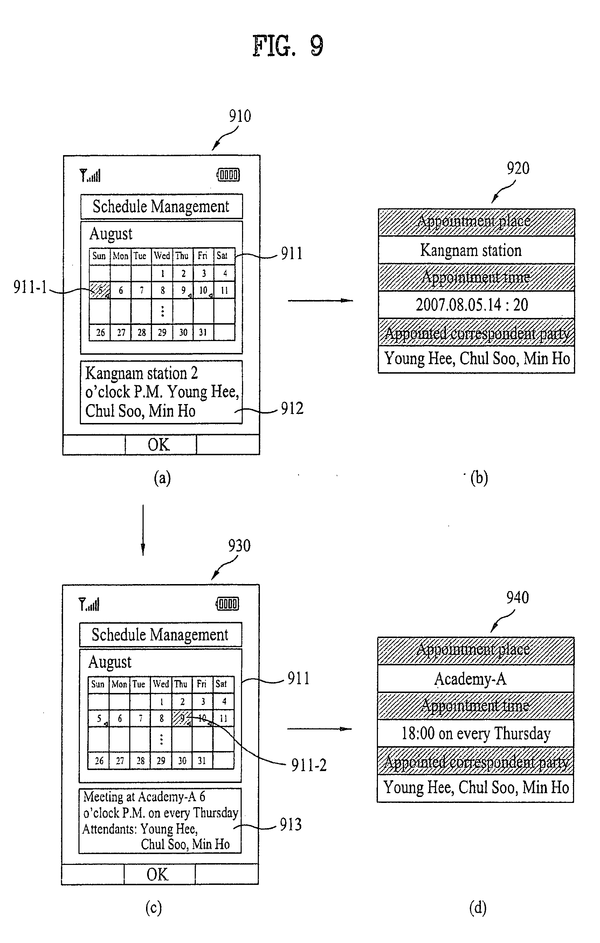

Next, FIG. 9 is an overview of display screens illustrating a method for obtaining user schedule information from appointment information managed by a schedule managing program according to one example.

Further, the schedule management program corresponds to a computer program product that manages a schedule, anniversary, etc. set by a user. Thus, the terminal 100 can inform a user of a preset schedule or anniversary by executing the schedule management program at a specific point of time (generally, a time set by a user). Also, the schedule management program can manage an anniversary (e.g., New Year's Day, Thanksgiving Day, Christmas Day, etc.) set as a default.

The terminal 100 also manages schedule contents 912 of 'P.M. 02;00, Kangnam station. Young Hee, Chul Soo, Min Ho' for a scheduled date 'August 5, 2007' 911-1 among schedules set for August (see FIG. 9A(a)). As shown in the display screen in FIG. 9A(a), the terminal 100 can determine that an appointment place is 'Kangnam station; from '∼Kangnam station-' in the schedule contents 912.

The terminal 100 can also determine that an appointment time is '2007.08.05.14:00' from the scheduled date 'August 5, 2007' 911-1 and '∼P.M. 02:00∼' in the schedule contents 912. Similarly, the terminal 100 can determine that an appointed correspondent party includes 'Young Hee, Chul Soo, Min Ho' from '-Young Hee, Chul Soo, Min Ho' in the schedule contents 912. The extracted information is shown in the table 920 in FIG. 9(b).

Further, as shown in FIG. 9(c), the terminal 100 manages the schedule contents 913 of 'Meeting at Academy-A, P.M. 06:00 on every Thursday. Attendants: Young Hee, Chul Soo, Min Ho, Me' for a schedule of a scheduled date 'August 9, 2007' 911-2 among schedules set for August using a schedule management program.

The terminal 100 can also determine that an appointment place is 'Academy-A' from '∼Academy-A∼' in the schedule contents 913, and determine that an appointment time is 'P.M. 06:00 on every Thursday' from the scheduled date 'August 9, 2007' 911-2 and '- P.M. 06:00 on every Thursday∼' in the contents 913. Similarly, the terminal 100 can determine that an appointed correspondent party includes 'Young Hee, Chul Soo, Min Ho' from '∼Young Hee, Chul Soo, Min Ho, Me' in the schedule contents 913. The extracted information is shown in the table 940 in FIG. 9(d).

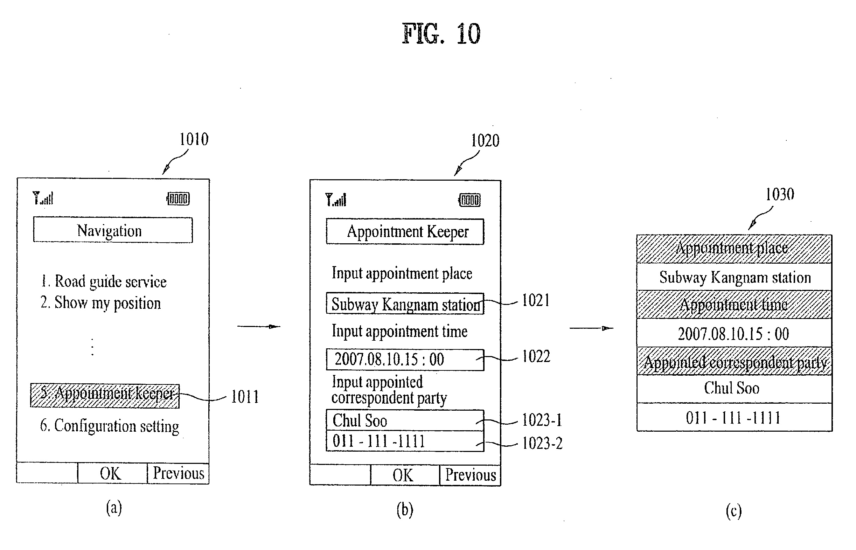

Next, FIG. 10 is an overview of display screens illustrating a method for obtaining user schedule information from appointment information managed by a position-location module driving computer program product.

In FIG. 10, a position-location module driving computer program product corresponds to a program for managing a driving of the position-location module 115 and information used for driving the position-location module 115. In particular, in one embodiment of the present invention, the position-location module driving program corresponds to a program for enabling information to be input by a user and providing position relevant information synchronized with the input user input information.

Referring to FIG. 10(a), the user selects an 'appointment keeper' option 1011 from submenu items constructing the menu item 'Navigation'. Further, the appointment keeper is a function for controlling an operation of navigation based on appointment information input by the user.

When the user selects the 'appointment keeper' option 1011, the terminal 100 displays input windows for enabling an appointment place, an appointment time and an appointed correspondent party to be inputted by a user, respectively (see FIG. 10(b)).

When the user inputs 'subway Kangnam station' 1021, '2007.08.10.15:00' 1022 and 'Chul Soo' 1023-1 & '011-111-1111' 1023-2 as the appointment place, the appointment time and the appointed correspondent party in FIG. 10(b), respectively, the terminal 100 obtains the appointment place, the appointment time and the appointed correspondent party from the inputted appointment information. The obtained information is shown in the table 1030 in FIG. 10(c). Further, the input appointment information is managed by the position-location module driving program.

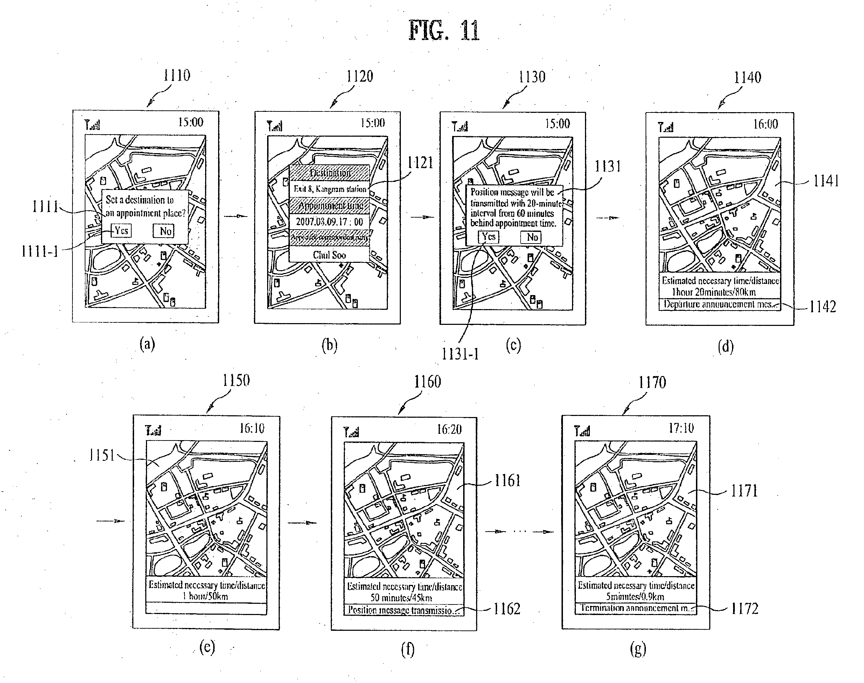

Referring again to FIG. 7, the terminal 100 displays the position relevant information synchronized with the user schedule information in the synchronizing step S740 via the display module 151 (S750). The displaying step S750 will now be explained in more detail with reference to FIG. 11.

In particular, FIG. 11 is an overview of display screens illustrating a process for displaying position relevant information synchronized with user scheduling information according to one example.

Referring to FIG. 11(a), the terminal 100 displays a window 1111 for querying whether the user wants to set a destination to an appointment place included in user schedule information on an image 1110. Further, the display screen shown in FIG. 11(a) can be omitted in some instances. If the display screen shown in FIG. 11(a) is omitted, the terminal 100 sets the destination as a default to the appointment place included in the user schedule information.

In addition, if the destination is set to the appointment place included in the user schedule information (e.g., the 'Yes' option 1111-1 is selected in FIG. 11(a)), the terminal 100 recognizes the 'destination, appointment time, and appointed correspondent party' as information for generating and/or transmitting position relevant information from the user schedule information and then displays a window 1121, on which the recognized information is displayed, on an image 1120 (see FIG. 11(b)).

For instance, the destination can include an appointment place included in user schedule information and a place at which an appointed correspondent party is located. When the destination is set to the appointed correspondent party located place, the destination can be frequently changed according to a position shift of the appointed correspondent party. Further, the appointment time and the appointed correspondent party are maintained as they are included in the user schedule information.

Referring to FIGs. 11(c) to (f), the terminal 100 displays in real time an estimated necessary time taken to a destination and a traveling distance to the destination on a prescribed area of an image while displaying a route to the destination from a starting point and a position of the terminal 100 on the route. In more detail, FIGs. 11(c) to (f) illustrate the terminal 100 displaying images 1130, 1140, 1150 and 1160, respectively, that display the estimated necessary time.

FIG. 11(c) also illustrates the terminal 100 displaying a window 1131 on the image 1130 asking the user if they want the information transmitted to the correspondent party at a particular interval. The user can then select the yes or no options displayed in the window 1131. FIGs. 11(d) and (f) also illustrate maps 1141, 1151 and 1161, respectively, that inform the user about their location on the map.

FIG. 11(d) also illustrates a departure announcement message 1142 informing the correspondent party that the user has departed. FIG. 11(f) illustrates the terminal 100 displaying a position message is being transmitted to inform the correspondent party where the vehicle is currently located. FIG. 11(g) also illustrates the terminal 100 displaying a map 1171 on an image 1170 including the current position of the vehicle on the map 1171 and a message 1172 informing the correspondent party that the user has arrived at or is close to the destination.

Referring again to FIG. 7, the terminal 100 sets a transmission operation control condition of the location relevant information synchronized with the user schedule information in the synchronizing step S740 (S760). According to the present invention, the synchronized position relevant information includes transmitted to an external terminal, and more particularly, to an appointed correspondent party. In this instance, the transmission operation control condition is a transmission start timing print, a transmission period, a transmission end timing point and a transmission condition of the synchronized position relevant information.

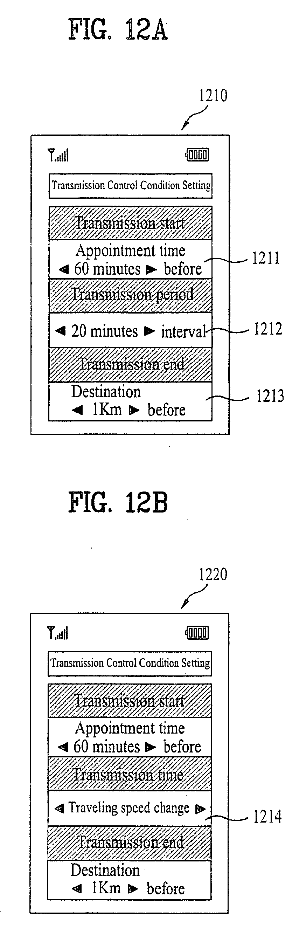

The setting step S760 will now be explained in more detail with reference to FIGs. 12A and 12B. In particular, FIGs. 12A and 12B are overviews of display screens illustrating a process for setting a transmitting operation control condition of position relevant information according to one embodiment of the present invention.

Referring to FIG. 12A, the user can set a transmission start timing point to '60 minutes before an appointment time' 1211, set a transmission period to '20-minute interval' 1212, and set a transmission end timing point to '1km behind destination' 1213.

In addition, the transmission start timing point can be set to a predetermined time from the appointment time or within a predetermined distance from the destination. The transmission period can also be set with a predetermined time interval. Further, the transmission end timing point can be set within a predetermined distance from the destination or within a predetermined time for a necessary time taken to the destination.

Referring to FIG. 12B, the user can set a condition for executing a transmission operation to 'traveling speed changed' 1214 instead of following a separate transmission period. Therefore, if a traveling speed of the terminal 100 is changed (particularly, if a traveling speed of a vehicle provided with the terminal 100 is changed), the terminal 100 transmits the synchronized position relevant information.

Of course, if the transmission period is set, the terminal 100 can separately perform a transmission operation at a timing point satisfying the condition while performing a transmission operation according to the set transmission period. Further, the condition can include a traveling speed changed case, a route changed case, a case that an estimated arrival time is later than an appointment time, and a case that a request is made by an appointed correspondent party.

Referring again back to FIG. 7, the terminal 100 transmits the synchronized position relevant information to the appointed correspondent party according to the transmission operation control condition set up in the setting step S760 (S770).

In addition, in the transmitting step S770, the terminal 100 can transmit the synchronized position relevant information to the appointed correspondent party using the mobile communication module 112, the wireless Internet module 113 and the short-range communication module 114.

For instance, when using the mobile communication module 112, the terminal 100 can transmit a SMS and/or MMS message containing the synchronized position relevant information via a mobile communication network. In addition, when using the wireless Internet module 113, the terminal 100 can transmit an e-mail and/or packet data containing the synchronized position relevant information via the Internet. When using the short-range communication module 114, the terminal 100 can transmit packet data containing the synchronized position relevant information using the above-mentioned short-range wireless communication technology.

Further, the synchronized position relevant information can include a departure time and place information of the terminal 100, current traveling speed and position information of the terminal 100, remaining distance and estimated necessary time information to a destination, route information to the destination, and information of a map on which the route to the destination is marked.

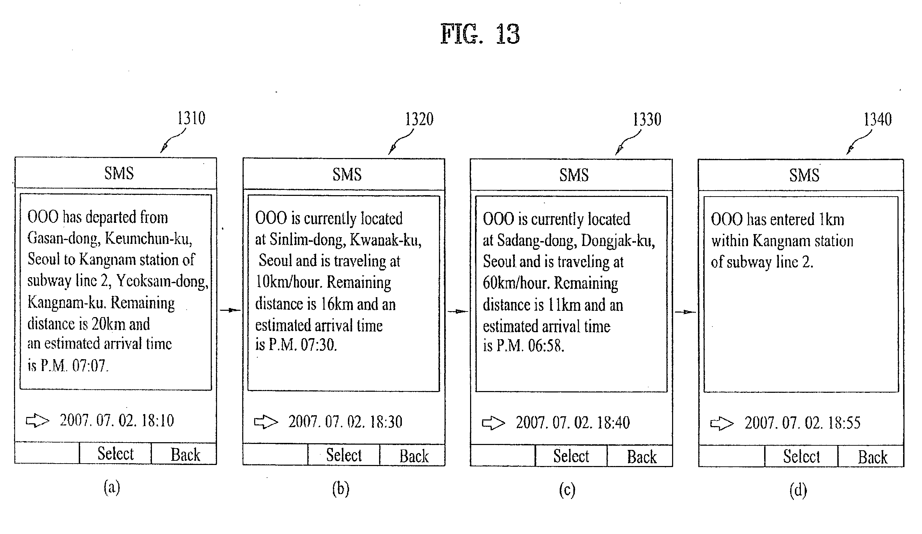

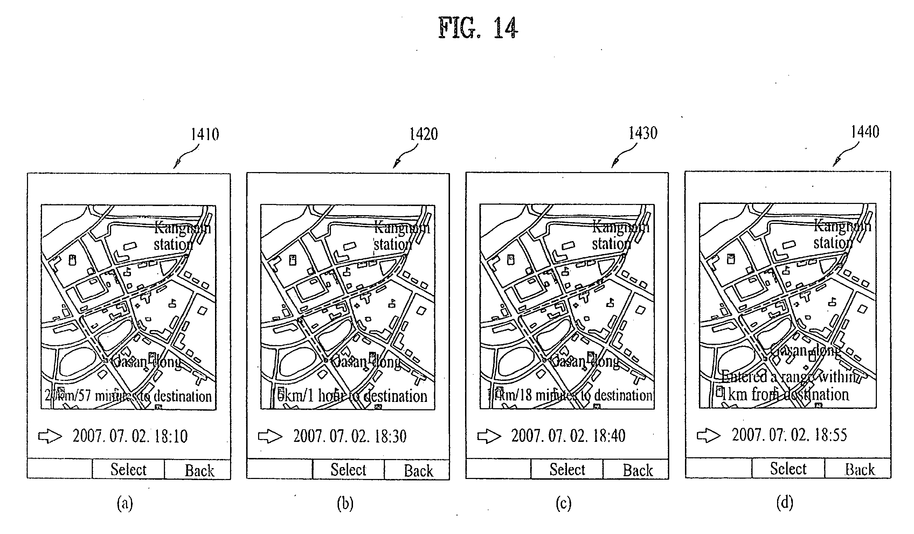

The transmitting step S770 will now be explained in more detail with reference to FIGs. 13 and 14. In addition, this embodiment assumes the synchronized position relevant information is transmitted using an SMS message and/or MMS message. Further, the destination is assumed to be 'Kangnam station on 2^{nd} subway line', the appointment time is assumed to be '19:00', the transmission start timing point is assumed to be '30 minutes before an appointment time', the transmission period is assumed to be '10-minute interval', and the transmission end timing point is assumed to be '1km within destination'.

In particular, FIG. 13 is an overview of display screens illustrating a first image for displaying position relevant information included in a message transmitted to an appointed correspondent party according to one embodiment of the present invention.

Referring to FIG. 13(a), the terminal 100 transmits a message 1310 for announcing a departure (hereinafter called 'departure announcement message') to an appointed correspondent party as soon as a vehicle provided with the terminal 100 departs. Further, the departure announcement message can include an origin (departure place) & destination, a departure time, and a distance remaining to the destination & an estimated necessary time taken to the destination.

Referring to FIG. 13(b), according to a transmission start timing point '30 minutes before appointment time', the terminal 100 starts a transmission of a message 1320 (hereinafter called 'position message') containing position relevant information at '18:30' that is 30 minutes before the appointment time '19:00'.

Referring to FIG. 13(c), according to the transmission period '10-minute interval', the terminal 100 transmits a position message 1330 to the appointed correspondent party at '18:40'. The terminal 100 also periodically transmits the position message to the appointed correspondent party in 10-minute intervals until the transmission end time '1km within destination' is entered.

Further, the position message can include a current position of the terminal 100, a traveling speed of the terminal 100, and a distance remaining to a destination & an estimated necessary time taken to the destination of the terminal 100.

Referring to FIG. 13(d), when the terminal 100 enters the transmission end timing point `1km within destination' the terminal 100 then transmits a message 1340 (hereinafter called 'termination announcement message') for announcing a termination of the position message transmission to the appointed correspondent party. In addition, the termination announcement message can contain contents for announcing that the terminal 100 has entered a range of 1km within the destination.

Next, FIG. 14 is an overview of display screens illustrating a second image for displaying position relevant information included in a message transmitted to an appointed correspondent party according to one example. In particular, FIG. 14 depicts a situation in which position relevant information contains a map and route information of a route marked on the map.

Further, the map containing the route information is transmitted as an image file attached to a message or transmitted using a captured image as message contents. Referring to FIG. 14(a), the terminal 100 transmits a message 1410 (hereinafter called 'departure announcement message') for announcing a departure to an appointed correspondent party as soon as the vehicle having the terminal 100 attached thereto departs.

In addition, the departure announcement message contains an origin (e.g., 'Gasan-Dong'), a destination (e.g., 'Kangnam station'), and a map on which a route from the origin to the destination is marked. In particular, on the map, the origin, which is a current position of the terminal 100, can be discriminately displayed. Further, a remaining distance to the destination and an estimated necessary time taken to the destination can be displayed on a prescribed area of an image.

Referring to FIG. 14(b), according to a transmission start timing point '30 minutes before appointment time', the terminal 100 starts a transmission of a message 1420 (hereinafter called 'position message') containing position relevant information at '18:30' which is 30 minutes earlier than the appointment time '19:00'.

Referring to FIG. 14(c), according to a transmission period '10-minute interval', the terminal 100 transmits a position message 1430 to the appointed correspondent party at '18:40'. The terminal 100 also continues transmitting the position message to the appointed correspondent party in 10-minute intervals until entering a transmission termination timing point '1km within destination'.

Further, and as discussed above, the position message contains a map on which a current position of the terminal 100 is distinguishably represented on the route from the origin to the destination. Also, a remaining distance to the destination and an estimated necessary time taken to the destination can be displayed on a prescribed area of an image.

Referring to FIG. 14(d), as the terminal 100 enters the transmission termination timing point '1km within destination', the terminal 100 transmits a message 1440 (hereinafter called 'termination announcement message') for announcing a termination of the message transmission to the appointed correspondent party. In addition, the termination announcement message can contain a phrase indicating that the terminal 100 has entered 1km within the destination on the route from the origin to the destination.

The terminal 100 can also display that the message containing the position relevant information has been transmitted to the appointed correspondent party via the display module 151. For instance, referring to FIG. 11(d), (f) and (g), and as discussed above, the terminal 100 displays phrases or messages 1142, 1162 and 1172 indicating that the departure announcement message, the position message and the termination announcement message have been transmitted on prescribed areas of the images while displaying the map images 1141, 1161 and 1171, on which the route and the current position of the terminal 100 are marked, respectively.

Referring again to FIG. 7, the terminal 100 decides whether the route information in the synchronized position relevant information is changed (S780). When deciding that the route information is changed, the terminal 100 obtains position relevant information corresponding to the changed route information via the position-location module 115.

The terminal 100 also returns to the synchronizing step S740 and then synchronizes the position relevant information obtained in the obtaining step S790 with the user schedule information. For instance, the position relevant information corresponding to the changed route information can contain current traveling speed and position information of the terminal 100, a remaining distance to the destination & an estimated traveling time, map information on a map on which the changed route to the destination is marked, and the like.

Further, when deciding that the route information is not changed, the terminal 100 returns to the transmitting step S770 and then continues transmitting the position relevant information synchronized in the synchronizing step S740 to the appointed correspondent party.

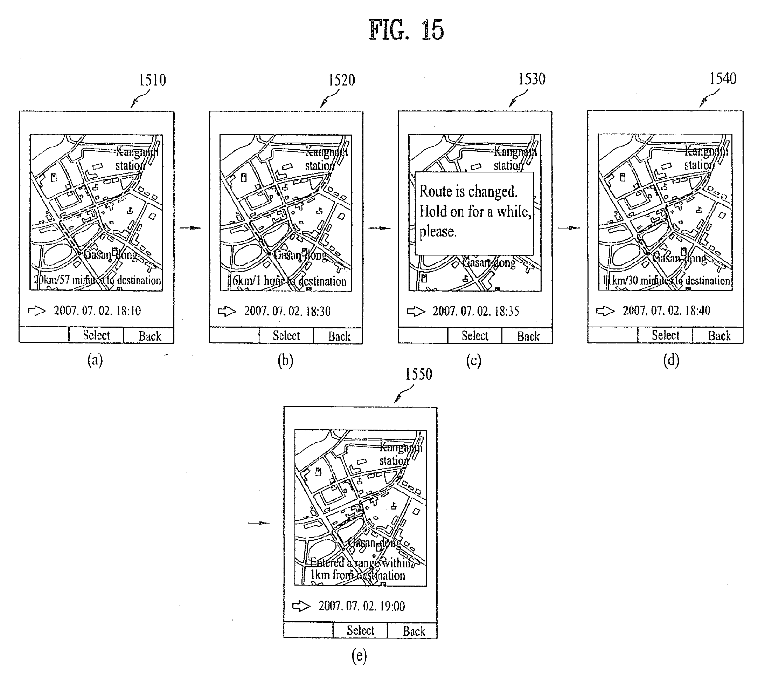

The transmitting step S770 will now be explained in more detail with reference to FIG. 15. In particular, FIG. 15 is on overview of display screens illustrating a third image for displaying position relevant information included in a message transmitted to an appointed correspondent party according to one example.

The descriptions of FIGs. 15 (a) and (b) are substantially identical to those of FIGs. 14(a) and (b), and accordingly a detailed description of FIGs. 15 (a) and (b) will be omitted in the following description. That is, the terminal displays the information 1510 and 1520 in FIGs. 15(a) and (b), which is substantially the same as displayed in FIGs. 14(a) and (b).

When a preset route is changed into another route in the state shown in FIG. 15(b) (this embodiment assumes that the origin and destination are not changed), the terminal 100 transmits a message 1530 for announcing that the route has been changed to the appointed correspondent party (see FIG. 15(c)). Subsequently, the terminal 100 obtains position relevant information corresponding to the changed route information via the position-location module 115 and then synchronizes the obtained position relevant information with user schedule information.

According to the transmission period 10-minute interval', the terminal 100 transmits a position message 1540 containing the synchronized position relevant information to the appointed correspondent party at '18:40' (see FIG. 15(d)). For instance, the synchronized position relevant information contains a map prepared with reference to a current position of the terminal 100, a changed route marked on the map, a position of the terminal 100 on the changed route, and the like. In addition, the synchronized position relevant information may contain a distance remaining to the destination and an estimated necessary time taken to the destination.

Referring to FIG. 15(e), as the terminal 100 enters the transmission termination timing point '1km within destination', the terminal 100 transmits a message 1550 (hereinafter called 'termination announcement message') for announcing a termination of the message transmission to the appointed correspondent party. In this instance, the termination announcement message can contain a phrase indicating that the terminal 100 has entered 1km within the destination by representing that the terminal 100 has entered 1km within the destination on the changed route.

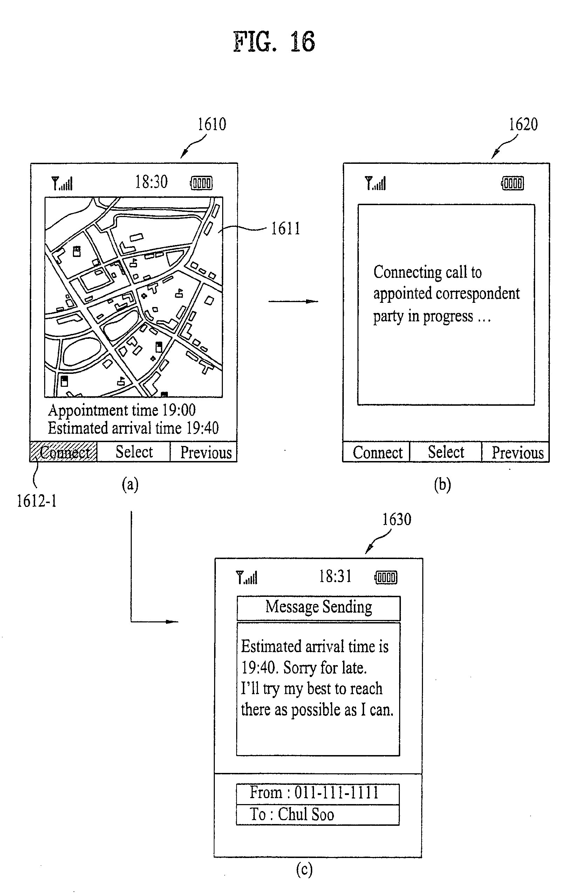

Further, when an estimated arrival time is delayed more than an appointment time, the terminal 100 connects a call and/or message to the appointed correspondent party. A process for connecting a call and/or message to an appointed correspondent party, when an estimated arrival time is delayed more than an appointment time, will now explained with reference to FIG. 16.

In particular, FIG. 16 is an overview of display screen illustrating a process for connecting a call and/or message to an appointed correspondent party, when an estimated arrival time is delayed more than an appointment time, according to one example.

Referring to FIG. 16(a), the terminal 100 displays a map 1611 containing route information from an origin to a destination on an image 1610. Further, an appointment time and an estimated arrival time are displayed on a prescribed area of the image 1610. This feature allows a user to intuitively understand how much the estimated arrival time is behind the appointment time.

In the state shown in FIG. 16(a), an area (hereinafter called 'connecting area') 1612-1 for receiving a command for connecting a call and/or message to an appointed correspondent party is provided to a soft key area of the image 1610. In addition, the connecting area 1612-1 is preferably displayed only if the estimated arrival time is delayed by a predetermined time or more than the appointment time or alternatively can be displayed all the time.

When the estimated arrival time becomes later than the appointment time by a predetermined time (e.g., 40 minutes), as shown in FIG. 16(a), and if the connecting area 1612-1 is activated, the terminal 100 connects a call 1620 to the appointed correspondent party (see FIG. 16(b)) or transmits a message 1630, which indicates that it will be late for the appointment time due to the delayed estimated arrival time, to the appointed correspondent party (see FIG. 16(c)).

Optionally, if the connecting area 1612-1 is not activated and the estimated arrival time gets delayed by a predetermined time or more than the appointment time, the terminal 100 can automatically connect a call to the appointed correspondent party or transmit a message providing an excuse for the delay.

According to embodiments of the present invention, the above-described position relevant information managing method can be implemented in a program recorded medium as computer-readable codes. The computer-readable media include all types of recording devices in which data readable by a computer system are stored. The computer-readable media can include a ROM, RAM, CD-ROM, magnetic tapes, floppy discs, optical data storage devices, and the like and also can include carrier-wave type implementations (e.g., transmission via the Internet). In addition, the computer can include the controller 180 of the terminal 100.

In particular, the above various embodiments may be implemented in a computer-readable medium using, for example, computer software, hardware, or some combination thereof. For a hardware implementation, the embodiments described above may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof.

For a software implementation, the embodiments described herein may be implemented with separate software modules, such as procedures and functions, each of which perform one or more of the functions and operations described herein. The software codes can be implemented with a software application written in any suitable programming language and may be stored in memory (for example, the memory 160), and executed by a controller or processor (for example, the controller 180).

In addition, the mobile terminal 100 may be implemented in a variety of different configurations. Examples of such configurations include a folder-type, slide-type, bar-type, rotational-type, swing-type and combinations thereof.

Accordingly, the present invention provides several advantages.

First, the present invention synchronizes position relevant information obtained by a terminal with user schedule information. Secondly, the present invention provides a correspondent terminal with position relevant information synchronized with user schedule information.

It will be apparent to those skilled in the art that various modifications and variations can be made in the present invention without departing from the scope of the inventions. Thus, it is intended that the present invention covers the modifications and variations of this invention provided they come within the scope of the appended claims.

## Claims

1. A terminal (100), comprising:
a position-location module (115) configured to receive position information of the terminal;
a controller (180) configured to control an operation of the position-location module, and to synchronize position relevant information obtained using the position information received by the position location module with user schedule information including at least an appointment place, an appointment time and an appointed correspondent party;
a wireless communication unit (110) configured to transmit the synchronized position relevant information to the appointed correspondent party according to a transmission operation control condition,
wherein the transmission operation control condition includes at least a transmission start timing point, a transmission period and a transmission end timing point,
wherein the controller is further configured to obtain the user schedule information from at least one of a previously transmitted/received message and/or e-mail; **characterised in that**
the transmission end timing point is a distance between the terminal (100) and the appointment place,
the synchronized position relevant information is a position message, and
the controller is further configured to control the wireless communication unit to transmit the position message together with a message announcing the termination of the position message transmission to the appointed correspondent party when the terminal enters the transmission end timing point.

2. The terminal of claim 1, further comprising:
wherein the transmission start timing point is set to a predetermined time from the appointment time or within a predetermined distance from a destination, and the transmission period is set with a predetermined time interval, and the transmission end timing point is set within a predetermined distance from the destination or within a predetermined time for a necessary time taken to the destination.

3. The terminal of claim 2, wherein the controller is further configured to activate the position-location module before a predetermined time from the appointment time included in the user schedule information.

4. The terminal of claim 2, wherein the controller is further configured to control the position-location module to set a destination to a place where the appointed correspondent party is located.

5. The terminal of any of claims 1 to 4, further comprising: an output unit (150) configured to output the position relevant information synchronized with the user schedule information.

6. The terminal of any of claims 1 to 5, wherein the terminal is a navigation terminal installed into a vehicle.

7. A computer program product embodied on a computer readable medium, the computer program product comprising: a first computer code configured to receive position information of the terminal;
a second computer code configured to obtain user schedule information from at least one of a previously transmitted/received message and/or e-mail;
a third computer code configured to control an operation of the first computer code, and to synchronize position relevant information obtained using the position information received by the first computer code with the user schedule information including at least an appointment place, an appointment time and an appointed correspondent party; and
a fourth computer code configured to transmit the synchronized position relevant information to the appointed correspondent party according to a transmission operation control condition,
wherein the transmission operation control condition includes at least a transmission start timing point, a transmission period and a transmission end timing point,
**characterised in that**
the transmission end timing point is a distance between the terminal (100) and the appointment place,
the synchronized position relevant information is a position message, and
the transmission of the position message is performed, together with a message announcing the termination of the position message transmission to the appointed correspondent party when the terminal enters the transmission end timing point.

8. The computer program product of claim 7, wherein the transmission start timing point is set to a predetermined time from the appointment time or within a predetermined distance from a destination, and the transmission period is set with a predetermined time interval, and the transmission end timing point is set within a predetermined distance from the destination or within a predetermined time for a necessary time taken to the destination.

9. A method of controlling a terminal, the method comprising:
- receiving position information of the terminal;
- controlling an operation of the position-location module;
- obtaining user schedule information from at least one of a previously transmitted/received message and/or e-mail;
- synchronizing position relevant information obtained using the position information received by the position-location module with the user schedule information including at least an appointment place, an appointment time and an appointed correspondent party; and
transmitting the synchronized position relevant information to the appointed correspondent party according to a transmission operation control condition,
wherein the transmission operation control condition includes at least a transmission start timing point, a transmission period and a transmission end timing point;
the method being **characterised by** the following:
the transmission end timing point is a distance between the terminal (100) and the appointment place,
the synchronized position relevant information is a position message, and
the transmission of the position message is performed, together with a message announcing the termination of the position message transmission to the appointed correspondent party when the terminal enters the transmission end timing point.

10. The method of claim 9, wherein the transmission start timing point is set to a predetermined time from the appointment time or within a predetermined distance from a destination, and the transmission period is set with a predetermined time interval, and the transmission end timing point is set within a predetermined distance from the destination or within a predetermined time for a necessary time taken to the destination.

## Patentansprüche

1. Endgerät (100), das aufweist:
ein Positionsortungsmodul (115), das konfiguriert ist, um Positionsinformationen des Endgeräts zu empfangen;
eine Steuerung (180), die konfiguriert ist, um einen Betrieb des Positionsortungsmoduls (115) zu steuern und positionsrelevante Informationen, die unter Verwendung der Positionsinformationen, die von dem Positionsortungsmodul empfangen werden, gewonnen werden, mit Benutzerzeitplaninformationen zu synchronisieren, die einen Terminort und/oder eine Terminzeit und/oder einen entsprechenden Verabredungspartner umfassen;
eine drahtlose Kommunikationseinheit (110), die konfiguriert ist, um die synchronisierten positionsrelevanten Informationen gemäß einer Sendebetriebssteuerbedingung an den entsprechenden Verabredungspartner zu senden,
wobei die Sendebetriebssteuerbedingung wenigstens einen Sendestartzeitpunkt, eine Sendezeitspanne und einen Sendeendzeitpunkt umfasst,
wobei die Steuerung ferner konfiguriert ist, um die Benutzerzeitplaninformationen aus einer früher gesendeten/empfangenen Nachricht und/oder Email zu gewinnen;
**dadurch gekennzeichnet, dass**
der Sendeendzeitpunkt ein Abstand zwischen dem Endgerät (100) und dem Terminort ist,
die synchronisierten positionsrelevanten Informationen eine Positionsnachricht sind, und
die Steuerung ferner konfiguriert ist, um die drahtlose Kommunikationseinheit zu steuern, um die Positionsnachricht zusammen mit einer Nachricht an den entsprechenden Verabredungspartner zu senden, welche die Beendigung der Positionsnachrichtensendung ankündigt, wenn das Endgerät den Sendeendzeitpunkt erreicht.

2. Endgerät nach Anspruch 1, das ferner aufweist:
wobei der Sendestartzeitpunkt auf eine vorgegebene Zeit vor der Terminzeit oder innerhalb eines vorgegebenen Abstands zu einem Ziel festgelegt wird, und die Sendezeitspanne mit einem vorgegebenen Sendezeitintervall festgelegt wird, und der Sendeendzeitpunkt innerhalb eines vorgegebenen Abstands zu dem Ziel oder innerhalb einer vorgegebenen Zeit für eine notwendige Zeit, die bis zum Ziel benötigt wird, festgelegt wird.

3. Endgerät nach Anspruch 2, wobei die Steuerung ferner konfiguriert ist, um das Positionsortungsmodul vor einer vorgegebenen Zeit zu der Terminzeit, die in den Benutzerzeitplaninformationen enthalten ist, zu aktivieren.

4. Endgerät nach Anspruch 2, wobei die Steuerung ferner konfiguriert ist, um das Positionsortungsmodul zu steuern, um ein Ziel auf einen Ort festzulegen, an dem sich der entsprechende Verabredungspartner befindet.

5. Endgerät nach einem der Ansprüche 1 bis 4, das ferner aufweist: eine Ausgabeeinheit (150), die konfiguriert ist, um die positionsrelevanten Informationen, die mit den Benutzerzeitplaninformationen synchronisiert sind, auszugeben.

6. Endgerät nach einem der Ansprüche 1 bis 5, wobei das Endgerät ein Navigationsendgerät ist, das in einem Fahrzeug installiert ist.

7. Computerprogrammprodukt, das auf einem computerlesbaren Medium ausgeführt ist,
wobei das Computerprogrammprodukt aufweist: einen ersten Computercode, der konfiguriert ist, um Positionsinformationen des Endgeräts zu empfangen;
einen zweiten Computercode, der konfiguriert ist, um Benutzerzeitplaninformationen aus einer früher gesendeten/empfangenen Nachricht und/oder Email zu gewinnen;
einen dritten Computercode, der konfiguriert ist, um einen Betrieb des ersten Computercodes zu steuern und die positionsrelevanten Informationen, die unter Verwendung der Positionsinformationen, die von ersten Computercode empfangen werden, gewonnen werden, mit den Benutzerzeitplaninformationen zu synchronisieren, die einen Terminort und/oder eine Terminzeit und/oder einen entsprechenden Verabredungspartner umfassen;
einen vierten Computercode, der konfiguriert ist, um die synchronisierten positionsrelevanten Informationen gemäß einer Sendebetriebssteuerbedingung an den entsprechenden Verabredungspartner zu senden,
wobei die Sendebetriebssteuerbedingung wenigstens einen Sendestartzeitpunkt, eine Sendezeitspanne und einen Sendeendzeitpunkt umfasst,
**dadurch gekennzeichnet, dass**
der Sendeendzeitpunkt ein Abstand zwischen dem Endgerät (100) und dem Terminort ist,
die synchronisierten positionsrelevanten Informationen eine Positionsnachricht sind, und
das Senden der Positionsnachricht zusammen mit einer Nachricht an den entsprechenden Verabredungspartner durchgeführt wird, welche die Beendigung der Positionsnachrichtensendung ankündigt, wenn das Endgerät den Sendeendzeitpunkt erreicht.

8. Computerprogrammprodukt nach Anspruch 7, wobei der Sendestartzeitpunkt auf eine vorgegebene Zeit vor der Terminzeit oder innerhalb eines vorgegebenen Abstands zu einem Ziel festgelegt wird, und die Sendezeitspanne mit einem vorgegebenen Sendezeitintervall festgelegt wird, und der Sendeendzeitpunkt innerhalb eines vorgegebenen Abstands zu dem Ziel oder innerhalb einer vorgegebenen Zeit für eine notwendige Zeit, die bis zum Ziel benötigt wird, festgelegt wird.

9. Verfahren zum Steuern eines Endgeräts, wobei das Verfahren aufweist:
- Empfangen von Positionsinformationen des Endgeräts;
- Steuern eines Betriebs des Positionsortungsmoduls;
- Gewinnen von Benutzerzeitplaninformationen aus einer früher gesendeten/empfangenen Nachricht und/oder Email;
- Synchronisieren von positionsrelevanten Informationen, die unter Verwendung der Positionsinformationen, die von dem Positionsortungsmodul empfangen werden, gewonnen werden, mit den Benutzerzeitplaninformationen, die einen Terminort und/oder eine Terminzeit und/oder einen entsprechenden Verabredungspartner umfassen;
Senden der synchronisierten positionsrelevanten Informationen gemäß einer Sendebetriebssteuerbedingung an den entsprechenden Verabredungspartner,
wobei die Sendebetriebssteuerbedingung wenigstens einen Sendestartzeitpunkt, eine Sendezeitspanne und einen Sendeendzeitpunkt umfasst,
wobei das Verfahren durch Folgendes gekennzeichnet ist:
der Sendeendzeitpunkt ist ein Abstand zwischen dem Endgerät (100) und dem Terminort,
die synchronisierten positionsrelevanten Informationen sind eine Positionsnachricht, und
das Senden der Positionsnachricht wird zusammen mit einer Nachricht an den entsprechenden Verabredungspartner durchgeführt, welche die Beendigung der Positionsnachrichtensendung ankündigt, wenn das Endgerät den Sendeendzeitpunkt erreicht.

10. Verfahren nach Anspruch 9, wobei der Sendestartzeitpunkt vor einer vorgegebenen Zeit von der Terminzeit oder innerhalb eines vorgegebenen Abstands zu einem Ziel festgelegt wird, und die Sendezeitspanne mit einem vorgegebenen Sendezeitintervall festgelegt wird, und der Sendeendzeitpunkt innerhalb eines vorgegebenen Abstands zu dem Ziel oder innerhalb einer vorgegebenen Zeit für eine notwendige Zeit, die bis zum Ziel benötigt wird, festgelegt wird.

## Revendications

1. Terminal (100), comprenant :
un module de localisation de position (115) configuré pour recevoir des informations de position du terminal ;
un dispositif de commande (180) configuré pour commander une opération du module de localisation de position, et pour synchroniser des informations pertinentes de position obtenues en utilisant les informations de position reçues par le module de localisation de position avec des informations de calendrier utilisateur incluant au moins un endroit de rendez-vous, une heure de rendez-vous et une personne correspondante convenue ;
une unité de communication sans fil (110) configurée pour transmettre les informations pertinentes de position synchronisées à la personne correspondante convenue selon une condition de commande d'opération de transmission,
dans lequel la condition de commande d'opération de transmission inclut au moins un instant de commencement de transmission, une période de transmission et un instant de fin de transmission,
dans lequel le dispositif de commande est en outre configuré pour obtenir les informations de calendrier utilisateur à partir d'au moins un parmi un message et/ou un e-mail auparavant transmis/reçus,
**caractérisé en ce que**
l'instant de fin de transmission est une distance entre le terminal (100) et l'endroit de rendez-vous,
les informations pertinentes de position synchronisées sont un message de position, et
le dispositif de commande est en outre configuré pour commander l'unité de communication sans fil pour transmettre le message de position, conjointement avec un message annonçant la terminaison de la transmission de message de position à la personne correspondante convenue, lorsque le terminal parvient à l'instant de fin de transmission.

2. Terminal selon la revendication 1, comprenant en outre :
dans lequel l'instant de commencement de transmission est réglé à une heure prédéterminée par rapport à l'heure de rendez-vous ou au sein d'une distance prédéterminée par rapport à une destination, et la période de transmission est réglée avec un intervalle de temps prédéterminé, et l'instant de fin de transmission est réglé au sein d'une distance prédéterminée par rapport à la destination ou au sein d'un temps prédéterminé pour un temps nécessaire pris jusqu'à la destination.

3. Terminal selon la revendication 2, dans lequel le dispositif de commande est en outre configuré pour activer le module de localisation de position avant une heure prédéterminée par rapport à l'heure de rendez-vous incluse dans les informations de calendrier utilisateur.

4. Terminal selon la revendication 2, dans lequel le dispositif de commande est en outre configuré pour commander le module de localisation de position pour régler une destination à un endroit où la personne correspondante convenue se trouve.

5. Terminal selon l'une quelconque des revendications 1 à 4, comprenant en outre : une unité de sortie (150) configurée pour sortir les informations pertinentes de position synchronisées avec les informations de calendrier utilisateur.

6. Terminal selon l'une quelconque des revendications 1 à 5, dans lequel le terminal est un terminal de navigation installé dans un véhicule.

7. Produit programme d'ordinateur réalisé sur un support lisible par ordinateur, le produit programme d'ordinateur comprenant :
un premier code d'ordinateur configuré pour recevoir des informations de position du terminal ;
un deuxième code d'ordinateur configuré pour obtenir des informations de calendrier utilisateur à partir d'au moins un parmi un message et/ou un e-mail auparavant transmis/reçus ;
un troisième code d'ordinateur configuré pour commander une opération du premier code d'ordinateur, et pour synchroniser des informations pertinentes de position obtenues en utilisant les informations de position reçues par le premier code d'ordinateur avec les informations de calendrier utilisateur incluant au moins un endroit de rendez-vous, une heure de rendez-vous et une personne correspondante convenue ; et
un quatrième code d'ordinateur configuré pour transmettre les informations pertinentes de position synchronisées à la personne correspondante convenue selon une condition de commande d'opération de transmission,
dans lequel la condition de commande d'opération de transmission inclut au moins un instant de commencement de transmission, une période de transmission et un instant de fin de transmission,
**caractérisé en ce que**
l'instant de fin de transmission est une distance entre le terminal (100) et l'endroit de rendez-vous,
les informations pertinentes de position synchronisées sont un message de position, et
la transmission du message de position est réalisée, conjointement avec un message annonçant la terminaison de la transmission de message de position à la personne correspondante convenue, lorsque le terminal parvient à l'instant de fin de transmission.

8. Produit programme d'ordinateur selon la revendication 7, dans lequel l'instant de commencement de transmission est réglé à une heure prédéterminée par rapport à l'heure de rendez-vous ou au sein d'une distance prédéterminée par rapport à une destination, et la période de transmission est réglée avec un intervalle de temps prédéterminé, et l'instant de fin de transmission est réglé au sein d'une distance prédéterminée par rapport à la destination ou au sein d'un temps prédéterminé pour un temps nécessaire pris jusqu'à la destination.

9. Procédé de commande d'un terminal, le procédé comprenant :
- la réception d'informations de position du terminal ;
- la commande d'une opération du module de localisation de position ;
- l'obtention d'informations de calendrier utilisateur à partir d'au moins un parmi un message et/ou un e-mail auparavant transmis/reçus ;
- la synchronisation d'informations pertinentes de position obtenues en utilisant les informations de position reçues par le module de localisation de position avec les informations de calendrier utilisateur incluant au moins un endroit de rendez-vous, une heure de rendez-vous et une personne correspondante convenue ; et
- la transmission des informations pertinentes de position synchronisées à la personne correspondante convenue selon une condition de commande d'opération de transmission,
dans lequel la condition de commande d'opération de transmission inclut au moins un instant de commencement de transmission, une période de transmission et un instant de fin de transmission ;
le procédé étant **caractérisé par** ce qui suit :
l'instant de fin de transmission est une distance entre le terminal (100) et l'endroit de rendez-vous,
les informations pertinentes de position synchronisées sont un message de position, et
la transmission du message de position est réalisée, conjointement avec un message annonçant la terminaison de la transmission de message de position à la personne correspondante convenue, lorsque le terminal parvient à l'instant de fin de transmission.

10. Procédé selon la revendication 9, dans lequel l'instant de commencement de transmission est réglé à une heure prédéterminée par rapport à l'heure de rendez-vous ou au sein d'une distance prédéterminée par rapport à une destination, et la période de transmission est réglée avec un intervalle de temps prédéterminé, et l'instant de fin de transmission est réglé au sein d'une distance prédéterminée par rapport à la destination ou au sein d'un temps prédéterminé pour un temps nécessaire pris jusqu'à la destination.
